# EUROPÄISCHE PATENTANMELDUNG

(11) **EP 1 717 110 A2**
(43) Veröffentlichungstag der Anmeldung: **02.11.2006**
(21) Anmeldenummer: 06008548.7
(22) Anmeldetag: 25.04.2006
(51) Int. Cl.: B60R 21/20

(54) **Verschlusssystem an einem Sitzbezug**

(30) Priorität: 25.04.2005 DE 102005019450
(71) Anmelder: Sand, Werner, 63802 Kleinostheim (DE)
(72) Erfinder: Sand, Werner, 63802 Kleinostheim (DE); Bäcker, Frank, 63741 Aschaffenburg (DE); Hepp, Christian, 63906 Erlenbach (DE)
(74) Vertreter: Thürer, Andreas

(57) **Zusammenfassung**

Verschlusssystem an einem Sitzbezug zum Abdecken eine Airbags, mit einer Sollbruchlinie (1), an der die Airbaghülle (2) eines darin angeordneten Airbags im Fall eines Auslösens aufreißt, um den Airbag freizugeben, wobei die Sollbruchlinie (1) eine erste und eine zweite entlang der Sollbruchlinie (1) angeordnete Verschlussleiste (3, 4) aufweist und die Verschlussleisten (3, 4) jeweils in Längsrichtung (5) der Verschlussleisten (3, 4) ausgedehnte, parallel zur Verschlussleiste (3, 4) verlaufende Verschlussrippen (6, 7) mit Hinterschneidungen (8) aufweisen, wobei die Verschlussrippen (6, 7) jeweils parallel zueinander verlaufen und wobei die Hinterschneidungen jeweils korrespondierend an Verschlussrippen (6, 7) einer gegenüberliegenden Verschlussleiste der Sollbruchlinie (1) so angeordnet sind, dass sie sich in einem zusammengesetzten Zustand in einer formschlüssigen Verbindung mit vorbestimmter Haltekraft hintergreifen.

## Beschreibung

Die Erfindung betrifft ein Verschlusssystem an einem Sitzbezug zum Abdecken eine Airbags, mit einer Sollbruchlinie, an der die Airbaghülle eines darin angeordneten Airbags im Fall eines Auslösens aufreißt, um den Airbag freizugeben. Die Erfindung betrifft weiterhin eine Airbaghülle, ein Verfahren zum Verschließen einer Airbaghülle mit einer Sollbruchlinie und ein Verfahren zum Herstellen eines Verschlussystems für eine Sollbruchlinie.

In Fahrzeugen werden mit einem Gasgenerator befüllbare Hüllen, Airbags, zur Erhöhung der Sicherheit der Fahrzeuginsassen in Gefahrensituationen sowohl im Frontbereich als auch in Seitenbereichen eingesetzt, zum Schutz bei sogenannten Offsetunfällen, die schräg zur Fahrzeugachse stattfinden. Für den seitlichen Schutz werden vorzugsweise ein Seitenairbag eingesetzt, der den Oberkörperschwerpunkt abdeckt und ein Kopfschutzairbag. Der Kopfschutzairbag wird in der A-Säule eingebaut, während der Seitenairbag häufig im Fahrzeugsitz zu intergrieren ist. Um einen ausreichenden Schutz zu gewährleisten, müssen die Airbags zum Unfallzeitpunkt sich sehr schnell und mit geringem Energieaufwand entfalten und mit Gas zu füllen sein. Während der Fahrzeuglebensdauer müssen die Airbags betriebsbereit und geschützt sein, um im Einsatzfall ohne Fehlfunktion verfügbar zu sein. Der Schutz des gefalteten Airbags erfolgt durch eine Abdeckung, eine Hülle, die im Unfallzeitpunkt an einer Sollbruchlinie aufreißt und den Airbarg zur Entfaltung freigibt. Die Sollbruchlinie wird im allgemeinen durch eine lokale Schwächung des Materials erreicht, beispielsweise eine Perforation. Zum einen muss sich diese Sollbruchlinie Im Fall eines Aufpralls leicht und mit geringem Kraftaufwand öffnen und zugleich während der Fahrzeuglebensdauer sicher verschlossen sein.

Im Stand der Technik sind Reissverschlüsse zum Verschließen und Befestigen von Bezügen bekannt, beispielsweise am Hinterrücken eines Autositzes.

WO 00/35719 zeigt ein Verschlusssystem für eine Airbaghülle, wobei eine Sollbruchlinie aus zwei Reihen von Verschlussgliedern gebildet ist, die reissverschlussartig ineinander greifen.

Dieses Verschlussystem ist jedoch nach dem einmaligen Gebrauch zerstört und müssen ausgetauscht werden. Die Reissverschlussfunktion wird somit nur beim Einsetzen und Zuziehen des Bezugsverschlusses verwendet.

Aufgabe der vorliegenden Erfindung ist es daher, ein wiederverwendbares Verschusssystem einer Airbaghülle bereitzustellen, dass eine sichere Lagerung und schnelle Öffnung im Unfallzeitpunkt ermöglicht.

Die Aufgabe wird gelöst durch ein eingangs beschriebenes Verschlussystem, wobei die Sollbruchlinie eine erste und eine zweite entlang der Sollbruchlinie angeordnete Verschlussleiste aufweist und die Verschlussleisten jeweils in Längsrichtung der Verschlussleisten ausgedehnte, parallel zur Verschlussleiste verlaufende Verschlussrippen mit Hinterschneidungen aufweisen, wobei die Verschlussrippen jeweils parallel zueinander verlaufen und wobei die Hinterschneidungen jeweils korrespondierend an Verschlussrippen einer gegenüberliegenden Verschlussleiste der Sollbruchlinie so angeordnet sind, dass sie sich in einem zusammengesetzten Zustand in einer formschlüssigen Verbindung mit vorbestimmter Haltekraft hintergreifen.

Das erfindungsgemäße Verschlusssystem wird nach dem Auslösen des Airbags nicht funktionsuntüchtig sondern kann auf dieselbe Weise, wie es verschlossen wird, wiederverwendet werden. Die Stabilität eines in einer Krümmung verlaufenden Verschlusssystems ist wesentlich verbessert, da aufgrund der geometrischen Anordnung der Hinterschneidungen auch bei hohen Belastungen kein Ausreißen stattfinden kann.

Ein sicherer Halt der Airbaghülle ist gegeben, wenn zumindest zwei oder drei Verschlussrippen an einer Verschlussleiste angeordnet sind. Das Verschlusssystem ist zudem leicht herzustellen.

Ein starker Formschluss kann hergestellt werden, wenn Hinterschneidungsbereiche längs freier Kanten der Verschlussrippen angeordnet sind und einseitig oder beidseitig korrespondierend mit den gegenüberliegenden Verschlussrippen ausgebildet sind. Die Verschlussrippen der Verschlussleisten sind somit zudem federnd ineinander einsetzbar, indem die Verschlussleisten entweder über den gesamten Verschlussbereich aufeinander gepresst werden oder an einer Endseite beginnend ineinander gedrückt werden.

Beide Verschlussleisten können gleich ausgebildet sein, wenn Querschnitte der Verschlussleisten als E-Form ausgebildet sind, an deren freien Kanten Hinterschneidungsbereiche verlaufen, die pfeilartige Querschnitte aufweisen. Die E-Form ist zudem mechanisch einfach stabil auszuführen. Zum Ineinanderführen werden sie spiegelbildlich ineinander gesetzt. Sie können ohne weiteres nach dem Öffnen wieder verschlossen werden, wobei sie die gleiche Haltekraft behalten.

Eine glatte Außenfläche wird einfach erreicht, wenn die Verschlussleisten nach innen zum Airbag versetzt angeordnet sind. Die Stabilität bleibt dabei erhalten. Die Rippenanzahl kann sehr variabel gestaltet werden, ohne dass es an der Außenfläche sichtbar wird.

Vorteilhaft ist es, wenn die Verschlussleisten an einem Befestigungsbereich zum Befestigen an der Airbaghülle, vorzugsweise einstückig mit dem Befestigungsbereich, ausgebildet sind. Der Befestigungsbereich verteilt angreifende Käfte auf eine größere Fläche und verhindert somit lokale Spannungsspitzen.

Der Befestigungsbereich ermöglicht eine einheitliche Oberflächenausbildung und zugleich stabile Befestigung, wenn der Befestigungsbereich an der Airbaghülle so auszubilden ist, so dass auch im Bereich der Sollbruchlinie im wesentlichen Airbaghüllenmaterial vorhanden ist, insbesondere dass Kanten der Airbaghülle im Bereich der Sollbruchlinie im zusammengesetzten Zustand der Verschlussleisten aneinanderstoßen und/oder sich gegenseitig mit vorbestimmtem Maß überlappen. Wenn die Kontaktfläche der Kanten der Airbaghülle zusammenstoßen, bilden sie lediglich eine sehr geringe Störung.

Eine schnelle und zuverlässige Herstellung ist möglich, wenn die Verschlussleisten als Extrusionsprofil ausgebildet sind. Zudem sind die Profile somit sehr stabil und mit einem geringen Materialeinsatz zu fertigen. Es sind keine zusätzliche Herstellungsschritte notwendig.

Vorteilhaft ist es, wenn die Verschlussrippen einstückig mit den Verschlussleisten ausgebildet, insbesondere extrudiert sind. Es können somit die Verschlussleisten und die Befestigungsbereich einstückig extrudiert werden, was eine sehr stabile und reproduzierbare Ausführung des Verschlussystems ermöglicht.

Ein weiterer Herstellungsschritt wird eingespart, wenn die Verschlussleisten einstückig mit der Airbaghülle ausgebildet sind.

Eine sicherer Verschluss ist möglich, wenn eine Laufnut an äußeren Endbereichen der Verschlussleisten zum Einführen und/oder Herausführen eines Zugverbinders vorgesehen ist. Der Verrschluss kann somit zum Verbinden an einem äußeren Endbereich eingeführt werden und am anderen Endbereich nach dem Durchlaufen und Verschließen des Verschlussystems wieder herausgenommen werden. Das Verschließen ist somit mit einem sehr geringen Kraftaufwand möglich. Auf die vorgeschlagene Weise bildet der Zugverbinder kein hervorstehendes Element in dem Verschlussystem, was eventuell zu einer Beschädigung der Airbaghülle oder des Airbags führen könnte.

Die Aufgabe wird ebenfalls gelöst durch eine Airbaghülle mit einer Sollbruchlinie und einem Verschlussystem nach einem der Ansprüche 1 bis 12.

Die Aufgabe wird ebenfalls gelöst durch ein Verfahren zum Verschließen einer Airbaghülle mit einer Sollbruchlinie, wobei an der Sollbruchlinie angeordnete Verschlussleisten, insbesondere nach einem der Ansprüche 1 bis 12, so ineinander eingebracht werden, dass Hinterschneidungen von Verschlussrippen einer Verschlussleiste in Hinterschneidungen von Verschlussrippen einer gegenüberliegenden Verschlussleiste eingreifen.

Eine geringe Kraft muss aufgewendet werden, um einen sicheren Verschluss herzustellen, wenn die Verschlussleisten an einem Endbereich beginnend in einem Zugverbinder eingesetzt werden, der gegenüberliegende Verschlussleisten beim Hindurchziehen ineinanderschiebt.

Kein störendes Element, das die Oberfläche beeinträchtigen würden, liegt vor, wenn der Zugverbinder nach dem Hindurchziehen und Ineinanderschieben der Verschlussleisten aus den Verschlussleisten entfernt wird.

Die Aufgabe wird ebenfalls gelöst durch ein Verfahren zum Herstellen eines Verschlusssystems für eine Hülle mit einer Sollbruchlinie, insbesondere eines Verschlusssystems einer Airbaghülle, insbesondere nach einem der Ansprüche 1 bis 12, wobei eine Verschlussleiste mit längsverlaufenden Verschlussrippen und längs an den Verschlussrippen verlaufenden Hinterschneidungen mittels eines Extrusionsverfahrens aus Kunststoff extrudiert wird, vorzugsweise werden die Verschlussleiste, die Verschlussrippen und die Hinterschneidungen einstückig extrudiert, und weiter vorzugsweise einstückig mit einem Befestigungsbereich zum Befestigen an einer Hülle mit einer Sollbruchlinie.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine perspektivische Ansicht einer Airbaghülle mit Verschlusssystem,
- Fig. 2: einen Querschnitt durch eine Airbaghülle mit Verschlussystem,
- Fig. 3: einen Querschnitt durch eine Verschlussleiste und
- Fig. 4: einen Zugverbinder zum Verbinden eines Verschlusssystems.

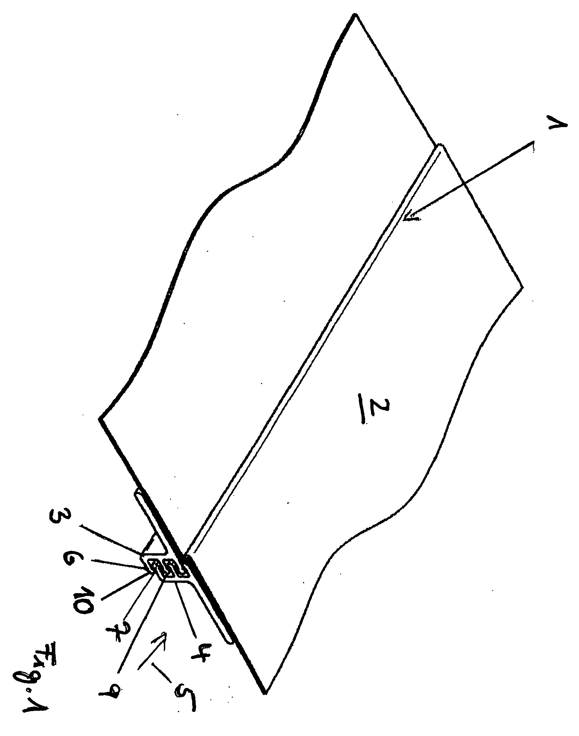

Fig. 1 zeigt eine perspektivische Ansicht einer Airbaghülle 2 mit einem Verschlusssystem. Die Airbaghülle 2 umgibt einen nicht dargestellten Airbag, der sich beispielsweise im Vorderraum eines Kraftfahrzeugs befindet. Die Airbaghülle 2 muss fest verschlossen sein, solange der Airbag in Wartestellung verharrt. Wird der Airbag allerdings in einem Gefahrenfall ausgelöst, muss sich das Verschlusssystem im Sinne einer Sollbruchlinie 1 lösen und den Airbag sehr schnell und ohne Beschädigung freigeben.

Hierzu weist das erfindungsgemäße Verschlussystem eine erste Verschlussleiste 3 und eine zweite Verschlussleiste 4 auf, die einen E-förmigen Querschnitt aufweisen. Die Verschlussleisten 3, 4 weisen jeweils drei parallel angeordnete Verschlussrippen 6, 7 auf, die an ihrer freien Kante 10 jeweils einen Hinterschneidungsbereich 9 aufweisen. Der Hinterschneidungsbereich 9 kann dabei, wie dargestellt beidseitig der freien Kante 10 verlaufen. Die Verschlussleisten 4 sind jeweils spiegelbildlich gegenüberliegend sowie um die Dicke einer halben Verschlussrippe parallel versetzt an gegenüberliegenden Kanten 13 der Airbaghülle 2 angeordnet. Die Befestigung der Verschlussleisten 4 an der Airbaghülle 2 erfolgt über jeweils einen Befestigungsbereich 12, der eine großflächige Anlagefläche an die Airbaghülle bildet.

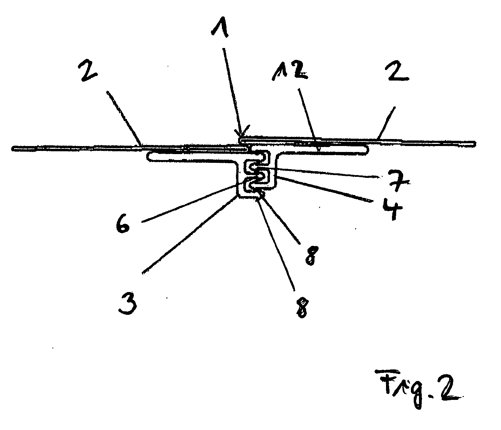

Fig. 2 zeigt einen Querschnitt durch eine Airbaghülle 2 mit Verschlussystem. Das Verschlussystem weist zwei gegenüberliegende, ineinander verschränkte Verschlussleisten 3, 4 mit einem E-förmigen Querschnitt auf. Die Verschlussleisten 3, 4 sind über jeweils einem Befestigungsbereich 12 mit der Airbaghülle 2 verbunden. Die Verschlussleisten weisen jeweils drei Verschlussrippen 6, 7 auf, wobei die beiden airbaghüllenentfernteren Verschlussrippen 6, 7 an der freien Kante 10 jeweisls beidseiteig längs verlaufende Hinterschneidungen 8 aufweisen.

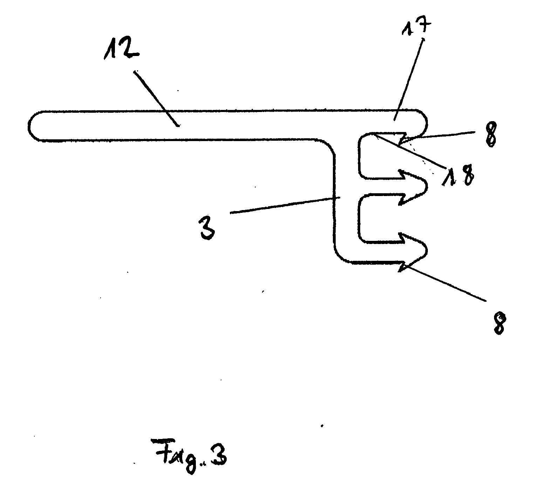

Fig. 3 zeigt einen Querschnitt durch eine E-förmige Verschlussleiste 3. Die airbaghüllennahe Verschlussrippe 17 schließt an den Verbindungsbereich 12 zu der Airbaghülle 2 an. Die airbaghüllennahe Verschlussrippe 17 weist lediglch an der airbaghüllenferne Unterseite 18 eine Hinterschneidung 8 auf.

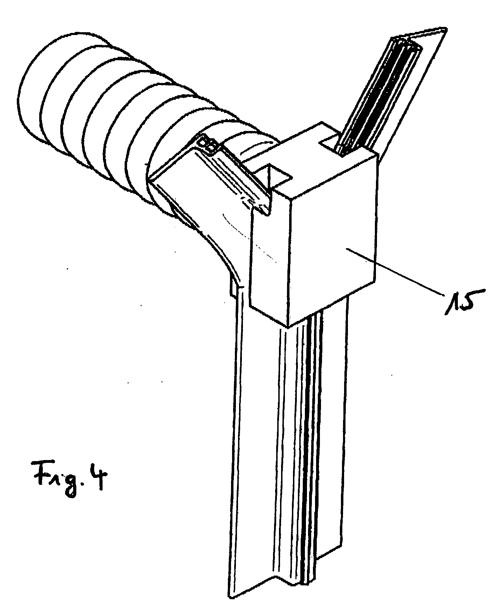

Fig. 4 zeigt einen Zugverbinder 15 zum Verbinden eines Verschlusssystems. Der Zugverbinder 15 führt über beidseitig zusammenlaufende, nicht dargestellte Ausnehmungen die Verschlussrippen 6, 7 der beiden gegenüberlliegenden Verschlussleisten 10 so ineinander, wie beispielsweise in Fig 1 dargestellt. Der Zugverbinder 15 wird dabei beispielsweise über eine Laufnut in die Verschlussleisten 3, 4 eingeführt und über eine Laufnut an dem anderen Ende der Verschlussleiste 3, 4 wieder entfernt, so dass er die verschlossene Airbaghülle 2 nicht aufwölbt.

### BEZUGSZEICHENLISTE

- 1: Sollbruchlinie
- 2: Airbaghülle
- 3: erste Verschlussleiste
- 4: zweite Verschlussleiste
- 5: Längsrichtung
- 6: Verschlussrippe
- 7: Verschlussrippe
- 8: Hinterschneidung
- 9: Hinterschneidungsbereich
- 10: freie Kante
- 11: Querschnitt
- 12: Befestigungsbereich
- 13: Kante
- 14: Endbereich
- 15: Zugverbinder
- 16: Laufnut
- 17: Verschlussrippe

## Patentansprüche

**1.** Verschlusssystem an einem Sitzbezug zum Abdecken eine Airbags, mit einer Sollbruchlinie (1), an der die Airbaghülle (2) eines darin angeordneten Airbags im Fall eines Auslösens aufreißt, um den Airbag freizugeben, wobei die Sollbruchlinie (1) eine erste und eine zweite entlang der Sollbruchlinie (1) angeordnete Verschlussleiste (3, 4) aufweist und die Verschlussleisten (3, 4) jeweils in Längsrichtung (5) der Verschlussleisten (3, 4) ausgedehnte, parallel zur Verschlussleiste (3, 4) verlaufende Verschlussrippen (6, 7) mit Hinterschneidungen (8) aufweisen, wobei die Verschlussrippen (6, 7) jeweils parallel zueinander verlaufen und wobei die Hinterschneidungen (8) jeweils korrespondierend an Verschlussrippen (6, 7) einer gegenüberliegenden Verschlussleiste der Sollbruchlinie (1) so angeordnet sind, dass sie sich in einem zusammengesetzten Zustand in einer formschlüssigen Verbindung mit vorbestimmter Haltekraft hintergreifen.

**2.** Verschlusssystem nach Anspruch 1, **dadurch gekennzeichnet, dass** zumindest zwei oder drei Verschlussrippen (6, 7) an einer Verschlussleiste (3, 4) angeordnet sind.

**3.** Verschlusssystem nach Anspruch 1 oder 2, **dadurch gekennzeichnet, dass** Hinterschneidungsbereiche (9) längs freier Kanten (10) der Verschlussrippen (6, 7) angeordnet sind und einseitig oder beidseitig korrespondierend mit den gegenüberliegenden Verschlussrippen ausgebildet sind.

**4.** Verschlusssystem nach einem der Ansprüche 1 bis 3, **dadurch gekennzeichnet, dass** Querschnitte (11) der Verschlussleisten (3, 4) als E-Form ausgebildet sind, an deren freien Kanten (10) Hinterschneidungsbereiche (9) verlaufen, die pfeilartige Querschnitte aufweisen.

**5.** Verschlusssystem nach einem der Ansprüche 1 bis 4, **dadurch gekennzeichnet, dass** die Verschlussleisten (3, 4) nach innen zum Airbag versetzt angeordnet sind.

**7.** Verschlusssystem nach einem der Ansprüche 1 bis 6, **dadurch gekennzeichnet, dass** die Verschlussleisten (3, 4) an einem Befestigungsbereich (12) zum Befestigen an der Airbaghülle (2), vorzugsweise einstückig mit dem Befestigungsbereich (12), ausgebildet sind.

**8.** Verschlusssystem nach einem der Ansprüche 1 bis 7, **dadurch gekennzeichnet, dass** der Befestigungsbereich (12) an der Airbaghülle (2) so auszubilden ist, so dass auch im Bereich der Sollbruchlinie (1) im wesentlichen Airbaghüllenmaterial vorhanden ist, insbesondere dass Kanten (13) der Airbaghülle (2) im Bereich der Sollbruchlinie (1) im zusammengesetzten Zustand der Verschlussleisten (3, 4) aneinanderstoßen und/oder sich gegenseitig mit vorbestimmtem Maß überlappen.

**9.** Verschlusssystem nach einem der Ansprüche 1 bis 8, **dadurch gekennzeichnet, dass** die Verschlussleisten (3, 4) als Extrusionsprofil ausgebildet sind.

**10.** Verschlusssystem nach einem der Ansprüche 1 bis 9, **dadurch gekennzeichnet, dass** die Verschlussrippen (6, 7) einstückig mit den Verschlussleisten (3, 4) ausgebildet, insbesondere extrudiert sind.

**11.** Verschlusssystem nach einem der Ansprüche 1 bis 10, **dadurch gekennzeichnet, dass** die Verschlussleisten (3, 4) einstückig mit der Airbaghülle (2) ausgebildet sind.

**12.** Verschlusssystem nach einem der Ansprüche 1 bis 11, **dadurch gekennzeichnet, dass** eine Laufnut (16) an äußeren Endbereichen (14) der Verschlussleisten (3, 4) zum Einführen und/oder Herausführen eines Zugverbinders (15) vorgesehen ist.

**13.** Airbaghülle (2) mit einer Sollbruchlinie (1) und einem Verschlussystem nach einem der Ansprüche 1 bis 12.

**14.** Verfahren zum Verschließen einer Airbaghülle (2) mit einer Sollbruchlinie (1), wobei an der Sollbruchlinie (1) angeordnete Verschlussleisten (3, 4), insbesondere nach einem der Ansprüche 1 bis 12, so ineinander eingebracht werden, dass Hinterschneidungen (8) von Verschlussrippen (6. 7) einer Verschlussleiste (3, 4) in Hinterschneidungen von Verschlussrippen einer gegenüberliegenden Verschlussleiste eingreifen.

**15.** Verfahren nach Anspruch 14, **dadurch gekennzeichnet, dass** die Verschlussleisten (3, 4) an einem Endbereich (14) beginnend in einem Zugverbinder (15) eingesetzt werden, der gegenüberliegende Verschlussleisten (3, 4) beim Hindurchziehen ineinanderschiebt.

**16.** Verfahren nach Anspruch 14 oder 15, **dadurch gekennzeichnet, dass** der Zugverbinder (15) nach dem Hindurchziehen und Ineinanderschieben der Verschlussleisten (3, 4) aus den Verschlussleisten entfernt wird.

**17.** Verfahren zum Herstellen eines Verschlussystems für eine Hülle mit einer Sollbruchlinie (1), insbesondere eines Verschlussystems einer Airbaghülle, insbesondere nach einem der Ansprüche 1 bis 12, wobei eine Verschlussleiste (3, 4) mit längsverlaufenden Verschlussrippen (6, 7) und längs an den Verschlussrippen verlaufenden Hinterschneidungen (8) mittels eines Extrusionsverfahrens aus Kunststoff extrudiert wird, wobei vorzugsweise die Verschlussleiste, die Verschlussrippen und die Hinterschneidungen einstückig extrudiert werden, und weiter vorzugsweise einstückig mit einem Befestigungsbereich (12) zum Befestigen an einer Hülle.
